# EUROPÄISCHE PATENTSCHRIFT

(11) **EP 2 619 452 B1**
(45) Veröffentlichungstag und Bekanntmachung des Hinweises auf die Patenterteilung: **12.11.2014**
(21) Anmeldenummer: 11757278.4
(22) Anmeldetag: 12.09.2011
(51) Int. Cl.: F03D 11/00

(54) **OFFSHORE WINDPARK BELEUCHTUNG**
OFFSHORE WIND FARM LIGHTING
ÉCLAIRAGE DE PARC ÉOLIEN EN MER

(30) Priorität: 24.09.2010 DE 102010046394
(43) Veröffentlichungstag der Anmeldung: 31.07.2013
(73) Patentinhaber: Senvion SE, 22297 Hamburg (DE)
(72) Erfinder: QUELL, Peter, 24783 Osterrönfeld (DE)
(74) Vertreter: Groth, Wieland
(86) Internationale Anmeldenummer: PCT/EP2011/065791
(87) Internationale Veröffentlichungsnummer: WO 2012/038296

(56) Entgegenhaltungen:
- EP-A1- 2 199 608
- WO-A1-03/104649
- DE-A1- 10 231 299

## Beschreibung

Die Erfindung betrifft ein Verfahren zum Betreiben eines Offshore-Windparks mit wenigstens einer Offshore Windenergieanlage sowie einem Offshore-Windpark, mit dem das Verfahren durchführbar ist.

Offshore-Windenergieanlagen (OWEA) müssen, insbesondere in Abhängigkeit von ihrer Gesamthöhe, mit einer Flugbefeuerungseinrichtung ausgestattet sein. Dabei wird zwischen Gefahrenfeuern, Hindernisfeuern, Blattspitzenbefeuerungen unterschieden. Zusätzlich müssen OWEAs mit einer Schifffahrtsbefeuerung und -kennzeichnung versehen werden.

Die genannten Kennzeichnungen eignen sich nur dafür, Hubschraubern oder Schiffen tagsüber die OWEAs und das Gebiet eines OWEA-Parks zum Hineinfahren zu kennzeichnen oder es ihnen zu ermöglich, bei nicht ausreichender Sicht den OWEA-Park umfahren zu können. Dazu müssen nicht alle OWEAs mit Lichtkennzeichnung ausgestattet sein. Es ist heute sogar gewünscht, während des Normalbetriebs so wenig Licht wie möglich zu emittieren, um beispielsweise Vögel oder andere Tiere möglichst wenig zu stören.

Aus der DE 102 31 299 A1 ist ein Kollisionswarnsystem für Windenergieanlagen bekannt, in dem sich nähernde Flugzeuge mit Transpondern ausgestattet sind und einen Code abstrahlen, der von der Kollisionseinrichtung interpretiert wird und das Kollisionswarnsystem in Abhängigkeit von Höhe, Entfernung, Geschwindigkeit und Richtung des Flugzeugs auslöst.

In der EP 2 199 608 A1 sind eine Windkraftanlage und ein Verfahren zum Betreiben einer Hindernis- oder Gefahrenbefeuerung einer Windkraftanlage offenbart, die rote und weiße Befeuerungseinrichtungen aufweist und einen Helligkeitssensor, wobei die weiße Befeuerungseinrichtung in Abhängigkeit von der erfassten Umgebungshelligkeit ein- und ausgeschaltet wird.

Die WO 03/104649 A1 offenbart ein Gefahrenfeuer für Windturbinen, wobei eine Flugbefeuerungseinrichtung mit einer Abdeckung versehen ist, die verhindert, dass das Licht der Flugbefeuerungseinrichtung nahe der Windenergieanlage vom Erdboden aus sichtbar ist.

Aus der DE 10 2006 007 536 A1 ist eine Flugbefeuerung bekannt, die erst auf bestimmte Signale hin eingeschaltet wird und somit eine unnötige Lichtbelastung der Umgebung vermeidet.

Problematisch an dieser verringerten Kennzeichnung ist, dass Fahrzeuge, insbesondere Schiffe, die beispielsweise aufgrund einer Havarie oder eines Navigationsfehlers in den OWEA-Park geraten, bei schlechter Sicht die Orientierung verlieren können und nur mit hohem Kollisionsrisiko im OWEA-Park manövrieren. Hubschrauber können bei schlechter Sicht aufgrund der drehenden Rotorblätter, der unklaren Ausrichtung der Rotoren im Park und wegen des hohen Kollisionsrisikos mit den OWEAs nicht ohne eine hohe Selbstgefährdung zur Bergung oder Rettung in den OWEA-Park einfliegen.

Es ist daher Aufgabe der Erfindung, ein Verfahren zum Betrieb eines Offshore-Windparks zur Verfügung zu stellen und einen Offshore-Windpark zur Durchführung eines derartigen Verfahrens, die bessere Orientierungsmöglichkeiten im Windpark bei Wetterlagen mit verschlechterten Sichtverhältnissen und/oder nachts bieten.

Erfindungsgemäß ist ein Verfahren zum Betreiben eines OWEA-Parks vorgesehen, indem eine Befeuerungseinrichtung in einem Normalmodus betrieben wird und im Normalmodus ein Gefahrensignal mittels einer Empfangseinrichtung empfangen wird und das empfangene Gefahrensignal einer Steuerungseinrichtung zugeführt wird, die die Befeuerungseinrichtung vom Normalmodus in einen Notbefeuerungsmodus schaltet, und wenigstens ein Scheinwerfer auf einem Maschinenhaus eingeschaltet wird, der die Rotorblätter der dem Maschinenhaus zugeordneten Windenergieanlage anstrahlt und/oder mindestens ein Scheinwerfer einer Windenergieanlage angeschaltet wird, der eine weitere Windenergieanlage anstrahlt.

Unter einem Offshore-Windpark werden hier Windparks mit einer, zwei, drei oder jeder beliebigen höheren Anzahl an Offshore-Windenergieanlagen bezeichnet.

Unter einer Befeuerungseinrichtung wird hier die Einrichtung zur Befeuerung des gesamten Windparks verstanden, die an den einzelnen Windenergieanlagen vorgesehene, individuelle Befeuerungseinrichtungen umfasst. Ebenso umfasst die Steuerungseinrichtung die zentrale Windparksteuerung wie auch an einzelnen OWEAs vorgesehene individuelle Steuerungseinrichtungen.

Die Befeuerungseinrichtung weist vorzugsweise eine Vielzahl an Leuchten und Scheinwerfern auf. Im Normalmodus wird jede der OWEAs tagsüber mit einer Tagesbefeuerung betrieben und nachtsüber mit einer Nachtbefeuerung. Im Normalmodus sind tagsüber keine oder nur so wenige Leuchten angeschaltet, wie es zur Verkehrssicherheit notwendig und gefordert ist. Beispielsweise kann während der Tagesbefeuerung eine weiß blitzende Gefahrenbefeuerung betrieben werden. Im Nachtmodus können weitere Leuchten zugeschaltet werden, und die Gefahrenbefeuerung kann während des Nachtmodus auf rot blinkende Hindernisbefeuerung umgeschaltet werden. Die OWEA kann insbesondere zusätzlich einen Dämmerungsschalter umfassen. Die OWEA kann auch einen Sichtweitenmesser aufweisen. Die gemessenen Helligkeitswerte und die gemessenen Sichtweitenwerte werden als Messsignale der Steuerungseinrichtung zugeführt. Die Helligkeitswerte und/oder Sichtweitenwerte werden mit abgelegten ersten Helligkeitsgrenzwerten und/oder ersten Sichtweitengrenzwerten verglichen, und bei Unterschreiten eines ersten Grenzwertes durch den zugeordneten Messwert wird der OWEA Park oder die OWEA im Normalmodus von der Tagesbefeuerung in die Nachtbefeuerung geschaltet.

Mit der erfindungsgemäßen Empfangseinrichtung können insbesondere Gefahrensignale empfangen werden. Wenn ein Gefahrensignal empfangen wird, wird es der Steuerungseinrichtung als Steuersignal zugeführt. Die Steuerungseinrichtung schaltet dann die OWEA vorzugsweise tags- wie auch nachtsüber vom Normalmodus in den Notbefeuerungsmodus. Im Notbefeuerungsmodus ist im Vergleich zum Normalmodus vorzugsweise sowohl zur Tagesbefeuerung als auch zur Nachtbefeuerung wenigstens ein zusätzlicher Scheinwerfer hinzugeschaltet . Beim Umschalten der Befeuerungseinrichtung vom Normal- in den Notbefeuerungsmodus werden vorzugsweise auch weitere Leuchten und/oder Wegkennzeichnungen angeschaltet.

Die Erfindung erreicht damit, dass einerseits eine unnötige Lichtemission bei normalen Verhältnissen vermieden wird und andererseits im Notfall die Sichtverhältnisse im OWEA-Park derart verbessert werden, dass sich verirrte oder havarierte Schiffe im OWEA-Park besser orientieren können. Rettungskräfte können durch die verbesserte Sicht im OWEA-Park Kollisionsrisiken minimieren und zur Rettung und Bergung in den OWEA-Park einfliegen oder einfahren. Zusätzlich kann durch die verbesserten Beleuchtungsverhältnisse die Suche im Windpark nach Schiffbrüchigen oder havarierten Schiffen vereinfacht werden.

Vorzugsweise detektiert die Empfangseinrichtung externe Gefahrensignale. Bei den externen Gefahrensignalen kann es sich z. B. um Transpondersignale herannahender Schiff oder Flugzeuge handeln. Aus den den externen Gefahrensignalen inhärenten Informationen über die Position des Flugzeugs oder des Schiffes berechnet die Steuerungseinrichtung den Abstand zum OWEA-Park und schaltet die Befeuerungseinrichtung bei Unterschreiten eines Mindestabstandes in den Notbefeuerungsmodus.

Alternativ kann das externe Gefahrensignal auch ein Datensignal sein, das über eine Datenübertragungsleitung oder einen Funkempfänger an die wenigstens eine OWEA oder OWEA-Windparksteuerung übertragen wird. Nach Empfang eines externen Gefahrensignals überträgt die OWEA oder OWEA-Windparksteuerung dieses Signal dann an alle anderen OWEAs im OWEA-Windpark, so dass deren Befeuerungseinrichtungen ebenfalls in den Notbefeuerungsmodus schalten.

In einer vorteilhaften Weiterbildung der Erfindung kann in oder an der wenigstens einen OWEA ein Notfalltaster vorgesehen sein, bei dessen Betätigung ein externes Gefahrensignal an die OWEA oder OWEA-Windparksteuerung abgegeben wird. Damit wird erreicht, dass der Notbefeuerungsmodus nicht nur außerhalb des Windparks aktiviert werden kann, sondern auch von innerhalb des OWEA-Windparks bzw. der OWEA selbst.

In einer Weiterbildung der Erfindung befindet sich im OWEA-Park eine aktive Empfangseinrichtung mit der die Position von Fahrzeugen eigenständig erkannt wird, und abhängig von Position, Geschwindigkeit und/oder Richtung der einzelnen Fahrzeuge wird ein internes Gefahrensignal erzeugt, wenn sich das Fahrzeug unmittelbar auf den OWEA-Park zubewegt oder sich bereits in ihm befindet.

In weiteren Ausführungsformen der Erfindung wird die Helligkeit bei der OWEA oder dem OWEA-Park mittels des wenigstens einen Dämmerungsschalters und/oder die Sichtweite mittels wenigstens eines Sichtweitenmessers gemessen, und in Abhängigkeit der in der Umgebung der OWEA oder des OWEA-Parks gemessenen Sichtweite und/oder Helligkeit werden die Helligkeit der Befeuerungseinrichtung und/oder die Anzahl der zusätzlich angeschalteten Scheinwerfer im Notbefeuerungsmodus eingestellt. Die Helligkeit der Scheinwerfer im Notfallmodus wird, zumindest in vorgegebenen Helligkeitsbereichen, desto höher eingestellt, je geringer die gemessene Helligkeit und / oder Sichtweite ist. Damit wird die Helligkeit der Scheinwerfer im Notfallmodus den Umgebungsgegebenheiten angepasst und nicht unnötig viel Strom verbraucht.

Es kann auch vorgesehen sein, dass die Steuerung die gemessenen Helligkeitswerte und/oder Sichtweitenwerte mit jeweils einem zweiten Grenzwert vergleicht und bei Überschreiten des oder der zweiten Grenzwerte trotz eines empfangenen Gefahrensignals die OWEA oder der OWEA-Park nicht in den Notbefeuerungsmodus geschaltet wird.

Die Erfindung erreicht damit, dass der Notbefeuerungsmodus und damit zusätzliche Befeuerungen nicht eingeschaltet zu werden brauchen, wenn die Sichtweite bzw. Helligkeit im OWEA-Park nicht unterhalb des zweiten Grenzwertes fällt und eine zusätzliche Beleuchtung im OWEA-Park deshalb nicht erforderlich ist.

Zusätzlich kann vorgesehen sein, die Anzahl der zusätzlichen Scheinwerfer und/oder deren Helligkeit in Abhängigkeit weiterer Umgebungsparameter wie Windgeschwindigkeit, Temperatur, Windrichtung, Niederschlag und/oder Wellenhöhe einzustellen.

Im Notbefeuerungsmodus wird wenigstens ein zusätzlicher Scheinwerfer eingeschaltet. Vorzugsweise ist dieser wenigstens eine zusätzliche Scheinwerfer auf eine benachbarte Windenergieanlage gerichtet oder auf eine Wasseroberfläche im Bereich der Windenergieanlage, an der der wenigstens eine zusätzliche Scheinwerfer angeordnet ist. Dadurch wird die benachbarte Windenergieanlage für in den Windpark einfahrende Schiffe, einfliegende Helikopter oder andere Fahrzeuge besonders kenntlich gemacht, bzw. im zweiten Fall wird ein freier Bereich der Wasseroberfläche kenntlich gemacht.

Vorzugsweise ist der wenigstens eine auf die Wasseroberfläche oder auf die benachbarte Windenergieanlage gerichtete Scheinwerfer positionsfest am Turm der einen Windenergieanlage montiert, um während des Nachführens des Maschinenhauses der einen Anlage seine vorgegebene Ausrichtung auf die Wasseroberfläche oder die benachbarte Windenergieanlage beizubehalten.

Vorzugsweise weist die Befeuerungseinrichtung eine Vielzahl von Scheinwerfern auf, die über den Windpark derart verteilt sind, dass jede einzelne Windenergieanlage durch einen an einer benachbarten oder weiter entfernten Windenergieanlage angeordneten Scheinwerfer angestrahlt wird.

Darüber hinaus sind vorzugsweise Scheinwerfer derart an den Türmen der Windenergieanlagen angeordnet und auf die Wasseroberfläche zwischen den OWEAs gerichtet, dass ein freier Durchfahrtsweg für Schiffe zwischen den OWEAs des OWEA-Parks hindurch kenntlich gemacht wird.

In einer weiteren Ausführungsform der Erfindung ist an den Windenergieanlagen eine Wegkennzeichnung angeordnet, die im Notbefeuerungsmodus beleuchtet ist und beispielsweise in Form von Pfeilen den kürzesten oder sichersten Weg aus dem Windpark hinaus weist.

In einer anderen Weiterbildung der Erfindung ist wenigstens eines der Rotorblätter einer der OWEAs des OWEA-Parks wenigstens bereichsweise beleuchtet und die Beleuchtung des wenigstens einen Rotorblatts nur im Notbefeuerungsmodus eingeschaltet.

In besonders bevorzugter Weiterbildung der Erfindung ist das wenigstens eine Rotorblatt lichtdurchlässig, vorzugsweise ist jedes Rotorblatt der einen Windenergieanlage zumindest bereichsweise lichtdurchlässig, und besonders bevorzugt sind auch die Rotorblätter der anderen Windenergieanlagen des Windparks entsprechend bereichsweise lichtdurchlässig. Bei dieser Ausführungsform der Erfindung ist an der Rotornabe oder im Bereich der Rotorblattwurzel des Rotorblatts für jedes Rotorblatt wenigstens ein Scheinwerfer vorgesehen, der in den Innenraum des Rotorblattes leuchtet und aufgrund der bereichsweisen Lichtdurchlässigkeit der Rotorblattwandung zumindest bereichsweise Lichtaustritt aus dem Rotorblatt gestattet. Der zumindest teilweise lichtdurchlässige Bereich ist dabei vorzugsweise an den Blattspitzen vorgesehen.

In einer alternativen Weiterbildung wird das Rotorblatt von außen durch wenigstens einen auf der zugehörigen Gondel befindlichen Scheinwerfer angestrahlt. Die Oberfläche des Rotorblattes kann dabei zumindest bereichsweise mit einer besonders gut reflektierenden Beschichtung bzw. Oberfläche versehen sein, wie z. B. retroreflektive Folien oder Strukturen. Dadurch wird besonders viel Scheinwerferlicht reflektiert, und das Rotorblatt ist besonders gut sichtbar.

Im Notbefeuerungsmodus wird vorzugsweise jedes der Rotorblätter ständig und auch im Betrieb und unabhängig von seiner aktuellen Position relativ zu den Scheinwerfern deutlich kenntlich gemacht.

In einer Weiterbildung der Erfindung werden im Notbefeuerungsmodus zusätzlich bereits vorhandene Leuchten der Windenergieanlage bzw. Windenergieanlagen eingeschaltet. Das können Leuchten an einer Außenleiter sein oder Leuchten entlang des Umfanges einer Landeplattform für Hubschrauber oder Wegweiserbeleuchtungen.

Die Aufgabe wird hinsichtlich des Offshore-Windparks durch einen Park mit den Merkmalen des Anspruchs 14 erfüllt. Der erfindungsgemäße Windpark weist eine Befeuerungseinrichtung auf, die in einen Normalmodus schaltbar ist und eine Empfangseinrichtung für ein Gefahrensignal, wobei das empfangene Gefahrensignal einer Steuerungseinrichtung zuführbar ist, die die Befeuerungseinrichtung vom Normalmodus in einen Notbefeuerungsmodus schaltet.

Bei extern ausgesandten Gefahrensignalen kann es sich um das Transpondersignal von Flugzeugen oder Schiffen, aber auch um akustische Signale, wie das Nebelhorn eines Schiffes, handeln. Im Notbefeuerungsmodus werden gegenüber dem Normalmodus zusätzlich Scheinwerfer, Leuchten eingeschaltet, um die einzelnen Windenergieanlagen deutlich erkennbar zu machen.

Hinsichtlich der Begriffsauslegung verweisen wir auf das zum Verfahren Gesagte. Insbesondere wird hier auch eine einzelne OWEA als Windpark verstanden.

Unter einer Befeuerungseinrichtung wird eine Gesamteinrichtung zur Befeuerung des gesamten Windparks verstanden, die an den einzelnen Windenergieanlagen vorgesehene, individuelle Befeuerungseinrichtungen umfasst. Ebenso umfasst die Steuerungseinrichtung die zentrale Windparksteuerung wie auch an einzelnen OWEAs vorgesehene individuelle Steuerungseinrichtungen.

Die Empfangseinrichtung kann einen Dämmerungsschalter zur Messung von Helligkeitswerten als Gefahrensignal und/oder einen Sichtweitenmesser, der als Gefahrensignal die Helligkeit misst, umfassen. Es ist erfindungsgemäß vorgesehen, die Empfangseinrichtung als Detektionseinheit z. B. als Empfänger für extern abgegebene Gefahrensignale auszubilden, beispielsweise eine Flugzeugkennung u. Ä., oder als Notfalltaster zum manuellen Betätigen für angelandete Schiffbrüchige.

Die Empfangseinrichtungen können an jeder einzelnen OWEA oder nur an einigen der OWEAs und/oder an gesonderten Stellen des OWEA-Parks vorgesehen sein. Insbesondere können die Empfangseinrichtungen redundant ausgeführt sein. Die gesamte Befeuerungseinrichtung des Windparks ist durch eine Notfallversorgung auch bei Ausfall des elektrischen Versorgungsnetzes betreibbar.

Alternativ kann das externe Gefahrensignal auch ein Datensignal sein, das über eine Datenübertragungsleitung an die wenigstens eine individuelle Steuerungseinrichtung der OWEA oder die OWEA-Windparksteuerungseinrichtung übertragen wird. Nach Empfang eines externen Gefahrensignals überträgt die individuelle Steuerungseinrichtung oder OWEA-Windparksteuerungsein-richtung dieses Signal dann an alle anderen OWEAs im OWEA-Windpark, so dass deren individuelle Befeuerungseinrichtungen in den Notbefeuerungsmodus schalten.

Die Befeuerungseinrichtung kann individuelle Befeuerungseinrichtungen der einzelnen OWEAs umfassen. Die Befeuerungseinrichtung kann zusätzlich Scheinwerfer und/oder Leuchten am Maschinenhaus und/oder an dem Turm und/oder der Einstiegsplattform einer oder mehrerer oder aller OWEAs des Windparks vorsehen.

Die Erfindung wird anhand von drei Ausführungsbeispielen in vier Figuren beschrieben. Dabei zeigen:
- Fig. 1: eine schematische Ansicht einer angeschalteten Befeuerungseinrichtung eines Offshore-Windparks,
- Fig. 2: eine Grundschaltung der Befeuerungseinrichtung,
- Fig. 3a: eine Rotorinnenblatt-Innenraumbeleuchtung,
- Fig. 3b: eine OWEA-Außenbeleuchtung,
- Fig. 4: Leuchten einer Windenergieanlage eines Windparks.

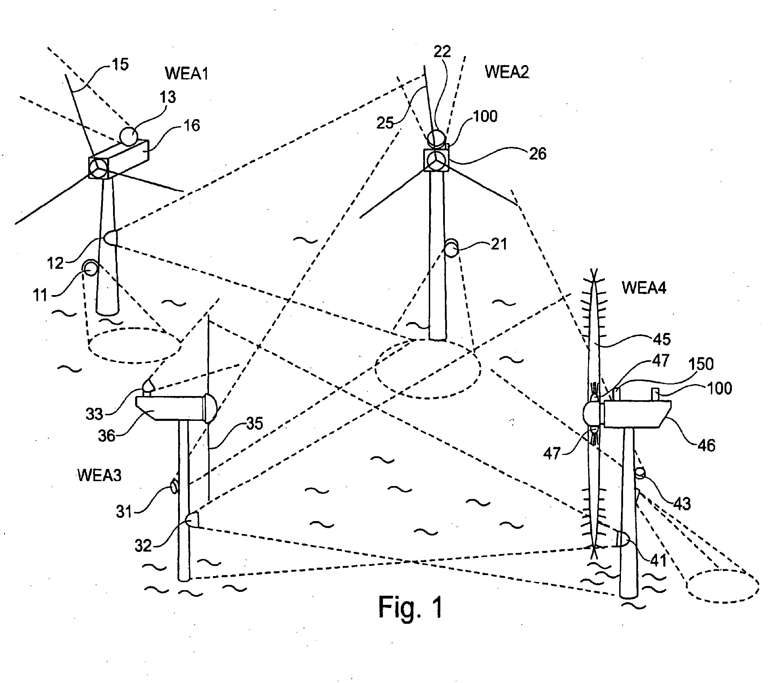

Fig. 1 zeigt einen Windpark mit vier Windenergieanlagen OWEA 1, OWEA 2, OWEA 3, OWEA 4. Die Erfindung erstreckt sich jedoch auf OWEA-Parks und auch Onshore-Windparks mit einer beliebigen Anzahl an Windenergieanlagen. Es können zwei, drei und eine beliebig höhere Anzahl an baugleichen oder unterschiedlichen Windenergieanlagen vorgesehen sein. Jede der Windenergieanlagen OWEA 1, OWEA 2, OWEA 3, OWEA 4 weist einen Turm, einen Rotor mit jeweils drei Rotorblättern 15, 25, 35, 45 und ein Maschinenhaus 16, 26, 36, 46 auf.

Die Windenergieanlagen OWEA 1, OWEA 2, OWEA 3, OWEA 4 weisen jeweils eine Befeuerungseinrichtung mit jeweils wenigstens einem Scheinwerfer 11, 12, 13, 21, 22, 31, 32, 33, 41, 42, 43, 47 auf. Die Befeuerungseinrichtungen sind unterschiedlich ausgebildet. Die erste Befeuerungseinrichtung der ersten Windenergieanlage OWEA 1 weist einen ersten auf eine Meeresoberfläche innerhalb des Windparks gerichteten Scheinwerfer 11 sowie einen zweiten auf die zweite Windenergieanlage OWEA 2 gerichteten Scheinwerfer 12 auf. Darüber hinaus weist die erste Befeuerungseinrichtung einen an einem ersten Rotor der ersten Windenergieanlage OWEA 1 abgewandten Ende des ersten Maschinenhauses 16 angeordneten Scheinwerfer 13 auf, der auf einen Bereich oberhalb des ersten Maschinenhauses 16 gerichtet ist und somit jeweils eines der vorbeistreichenden ersten Rotorblätter 15 des ersten Rotors hinterleuchtet.

Die zweite Windenergieanlage OWEA 2 weist einen an ihrem Turm angeordneten Scheinwerfer 21 auf, der auf die Meeresoberfläche im Bereich des Turmes gerichtet ist sowie einen zweiten Scheinwerfer 22 am hinteren, dem zweiten Rotor abgewandten Bereich des zweiten Maschinenhauses 26, der ebenfalls auf einen Bereich oberhalb des zweiten Maschinenhauses 26 gerichtet ist und der jeweils eines der vorbeistreichenden zweiten Rotorblätter 25 hinterleuchtet.

Die OWEA 3 weist zwei an ihrem Turm angeordnete Scheinwerfer 31, 32 auf, von denen der erste Scheinwerfer 31 auf die zweite Windenergieanlage OWEA 2 gerichtet ist und der andere Scheinwerfer 32 auf die vierte Windenergieanlage OWEA 4. Die Scheinwerfer 31, 32 sind dabei derart auf die Windenergieanlagen OWEA 2, OWEA 4 gerichtet, dass die Windenergieanlagen OWEA 2, OWEA 4 entlang ihrer gesamten Höhe angeleuchtet werden.

Ein dritter Scheinwerfer 33 ist auf dem Dach des dritten Maschinenhauses 36 der dritten Windenergieanlage OWEA 3 an einem dem zugeordneten Rotor abgewandten Teil montiert und von dort auf die Rotorblätter 35 derselben Windenergieanlage OWEA 3 gerichtet. Alternativ oder zusätzlich können am dritten Maschinenhaus 36 seitlich Scheinwerfer (nicht eingezeichnet) angeordnet sein, die einen Bereich seitlich des dritten Maschinenhauses 36 beleuchten und auf diese Weise seitlich am dritten Maschinenhaus 36 die jeweils vorbeistreichenden Rotorblätter 35 des dritten Rotors hinterleuchten.

Die OWEA 4 weist ebenfalls drei an ihrem Turm angeordnete Scheinwerfer 41, 42, 43 auf. Der erste Scheinwerfer 41 ist auf die OWEA 2 gerichtet und beleuchtet diese, der zweite Scheinwerfer 42 ist auf die OWEA 3 gerichtet und beleuchtet diese, der dritte Scheinwerfer 43 ist auf einen Bereich der Meeresoberfläche zwischen der OWEA 3 und OWEA 4 gerichtet. Im Gegensatz zur Beleuchtung der Rotorblätter 15, 25, 35 der OWEA 1, OWEA 2 und OWEA 3 umfassen die Rotorblätter 45 der OWEA 4 ein lichtdurchlässiges Wandungsmaterial, so dass die in die drei Innenräume der drei Rotorblätter 45 hineinleuchtenden drei Scheinwerfer 47 jedes der drei Rotorblätter 45 zum Leuchten bringen und somit die Gefahrensituation zu erkennen geben. Der Windpark der Fig. 1 ist im Notbefeuerungsmodus gezeigt.

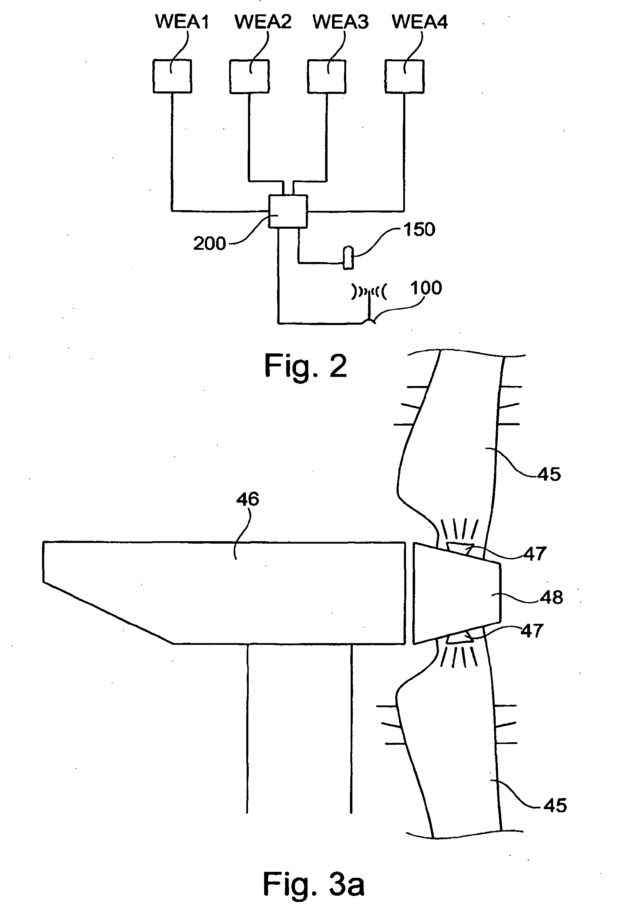

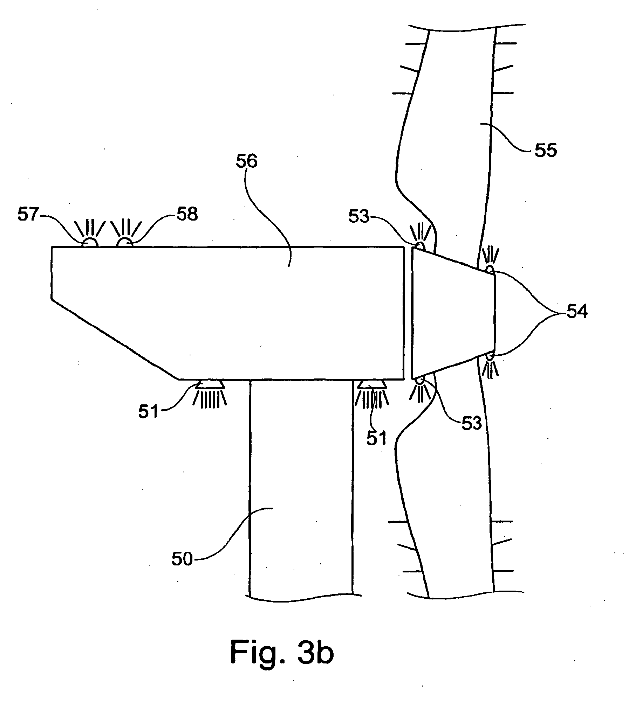

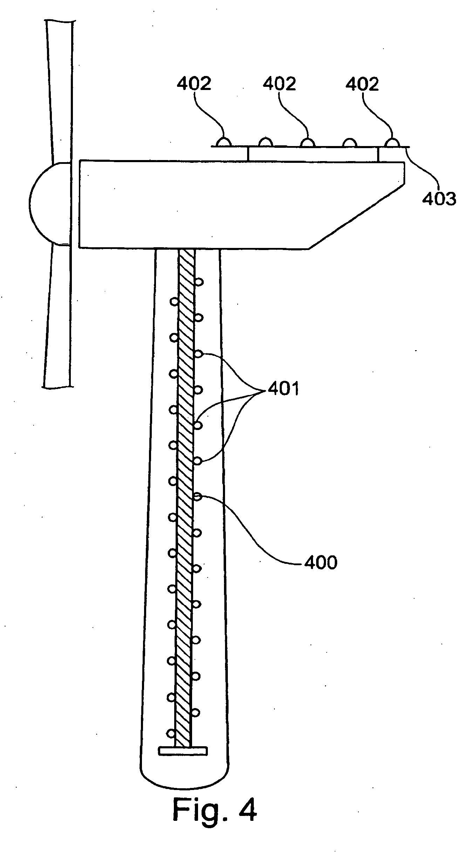

Die Befeuerungseinrichtung des Windparks umfasst in Fig. 1 u. a. an den Türmen oder den Dächern der Maschinenhäuser 16, 26, 36, 46 angeordnete Scheinwerfer 11, 12, 13, 21, 22, 31, 32, 33, 41, 42, 43, 47 sowie die in der OWEA 4 zur Innenbeleuchtung der Rotorblätter 45 vorgesehenen Scheinwerfer 47. Es sind beliebige Kombinationen der beschriebenen Beleuchtungsanordnungen der einzelnen Windenergieanlagen OWEA 1, OWEA 2, OWEA 3, OWEA 4 denkbar. Es sind weitere Leuchten oder Scheinwerfer, insbesondere wie in Fign. 3 und 4 gezeigt und später erörtert, als Teil der Befeuerungseinrichtung denkbar, die im Notbefeuerungsmodus angeschaltet werden.

Fig. 2 zeigt eine Grundschaltung der Befeuerungseinrichtung des Windparks. Grundsätzlich ist die Befeuerungseinrichtung des gesamten OWEA-Parks und jeder einzelnen OWEA tags- und auch nachtsüber in den Normalmodus geschaltet. Tagsüber heißt der Normalmodus Tagesmodus und nachtsüber Nachtmodus. Im Normalmodus sind sowohl tags- als auch nachtsüber grundsätzlich alle Scheinwerfer 11, 12, 13, 21, 22, 31, 32, 33, 41, 42, 43, 47 abgeschaltet. Im Normalmodus ist in Abhängigkeit von den Sicherheitsstandards und der Zulassungsart, die insbesondere von der Höhe der Windenergieanlagen OWEA 1, OWEA 2, OWEA 3, OWEA 4 und ihrem Standort abhängen, ein Gefahrenfeuer oder Hindernisfeuer und/oder eine Blattspitzenbefeuerungseinrichtung eingeschaltet. Gefahrenfeuer weisen eine Lichtstärke von mehr als I = 2.000 cd auf, während die Lichtstärke bei Hindernisfeuern bei etwa nur mindestens 1 = 10 cd liegt.

Im Normalmodus sind i.d.R. tagsüber weiße Blitzleuchten und nachtsüber rote Blinkleuchten eingeschaltet. 'Tagsüber' bedeutet hier eine Helligkeit im Umfeld des Windparks, die einen bestimmten Grenz-Helligkeitsgrenzwert überschreitet, 'nachtsüber' eine Umgebungshelligkeit, die den Grenz-Helligkeitsgrenzwert unterschreitet.

Zur Bestimmung der Helligkeit im gesamten OWEA-Park ist in diesem Ausführungsbeispiel an der vierten Windenergieanlage OWEA 4 ein Dämmerungsschalter 150 vorgesehen, der eine Steuerungseinrichtung 200 der Befeuerungseinrichtung mit Helligkeitsmesswerten beaufschlagt. Bei Überschreiten eines ersten Grenzwertes schaltet die Steuerungseinrichtung 200 die OWEAs oder den OWEA-Park vom Nachtmodus in den Tagesmodus und bei Unterschreiten wieder vom Tagesmodus in den Nachtmodus.

Die Befeuerungseinrichtung weist auch eine Empfangseinrichtung 100 auf, die auf ein externes Gefahrensignal hin anspricht. Die Empfangseinrichtung 100 kann entweder nur einen einzelnen Detektor oder eine Vielzahl, d. h. zwei oder mehr, an Detektoren umfassen, die jeweils an einer Windenergieanlage OWEA 1, OWEA 2, OWEA 3, OWEA 4 angeordnet sind. Das externe Anschaltsignal ist beispielsweise ein Transpondersignal eines Flugzeugs oder Schiffes oder ein anderes externes Signal. Es kann sich auch um das Motorengeräusch eines herannahenden Schiffes handeln. Die Empfangseinrichtung 100 beaufschlagt die Steuerungseinrichtung 200 mit dem in ein elektrisches Signal umgewandelten äußeren Signal und schaltet die Befeuerungseinrichtung vom Normalmodus in den Notbefeuerungsmodus. Dabei werden die oben geschilderten und in Fig. 1 dargestellten Scheinwerfer 11, 12, 13, 21, 22, 31, 32, 33, 41, 42, 43, 47, vorzugsweise alle oder in Abhängigkeit von der Umgebungshelligkeit, teilweise eingeschaltet.

In der Steuerungseinrichtung 200 findet nach Empfang des Gefahrensignals und vor dem Einschalten des Notbefeuerungsmodus ein Abgleich mit dem durch den Dämmerungsschalter 150 ständig gemessenen Helligkeitswert der Umgebung des OWEA-Parks statt. Dabei werden die Helligkeit und die Anzahl der im Notbefeuerungsmodus zugeschalteten Scheinwerfer der gemessenen Helligkeit angepasst. Die Helligkeit der zugeschalteten Scheinwerfer ist um so größer, je dunkler die Umgebung ist. Entsprechend ist die Anzahl der im Notbefeuerungsmodus zugeschalteten Scheinwerfer höher.

Der Steuerungseinrichtung 200 ist ein zweiter Helligkeitsgrenzwert eingegeben, bei dessen Überschreiten der OWEA-Park trotz eines empfangenen Gefahrensignals nicht in den Notbefeuerungsmodus geschaltet wird.

Im Notbefeuerungsmodus werden die Hindernisse in Form der Windenergieanlagen OWEA 1, OWEA 2, OWEA 3, OWEA 4 für in den Windpark zufällig oder bewusst einfahrende Schiffe, einfliegende Flugzeuge oder Helikopter kenntlich gemacht.

Fig. 3a zeigt eine Anordnung jeweils eines Scheinwerfers 47 im Bereich der Rotornabe 48 jedes der drei Rotorblätter 45 der OWEA 4 in Fig. 1. Die Scheinwerfer 47 leuchten die Innenräume jedes der drei Rotorblätter 45 aus. Wandungen der drei Rotorblätter 45 sind zumindest bereichsweise lichtdurchlässig ausgebildet, vorzugsweise sind die Wandungen der drei Rotorblätter 45 im Blattspitzenbereich lichtdurchlässig ausgebildet. Zusätzlich können die drei Rotorblätter 45 mit einer transparenten Beschichtung, z. B. Glascoat, Reflektoren oder einer Blattspitzenbefeuerung ausgestattet sein. Die Anordnung der Scheinwerfer 47 gestattet es, die drei Rotorblätter 45 im Notbefeuerungsmodus optimal als Gefahr zu kennzeichnen.

Fig. 3b zeigt eine erfindungsgemäße Anordnung der zusätzlich im Notbefeuerungsmodus anschaltbaren Scheinwerfer 51, 53, 54 einer der Windenergieanlagen OWEA 1, OWEA 2, OWEA 3, OWEA 4 in einer weiteren Ausführungsform der Erfindung. Dabei ist neben dem Turm 50 am meerseitigen Boden des Maschinenhauses 56 an sich gegenüberliegenden Seiten des Turmes 50 jeweils ein Scheinwerfer 51 angeordnet, der zum Beleuchten des zugehörigen Turmes 50 als auch zur Beleuchtung der (nicht eingezeichneten) Gründungsstruktur der Windenergieanlage OWEA 1, OWEA 2, OWEA 3, OWEA 4 auf dem Meeresboden bestimmt ist. Darüber hinaus ist an der turmabgewandten Seite jedes Rotorblattes 55 ein Scheinwerfer 54 angeordnet, der in Längsrichtung des Rotorblattes 55 ausgerichtet ist und die turmabgewandte Seite des Rotorblattes 55 beleuchtet, sowie jeweils ein Scheinwerfer 53 an der turmzugewandten Seite des Rotorblattes 55 zur Beleuchtung der turmzugewandten Seite jedes Rotorblattes 55.

Darüber hinaus zeigt Fig. 3b die am rotorabseitigen Ende des Maschinenhauses 56 angeordnete Tagesbefeuerung und Nachtbefeuerung in Form eines Hindernisfeuers 57 und eines Gefahrenfeuers 58. Das Hindernisfeuer 57 umfasst ein weiß blitzendes Licht und das Gefahrenfeuer 58 ein rotes Blinklicht. Die in Fig. 3b dargestellte Windenergieanlage kann eine, mehrere oder alle Windenergieanlagen OWEA 1, OWEA 2, OWEA 3, OWEA 4 ersetzen, die in Fig. 3a dargestellt sind, es sind auch Kombinationen der Scheinwerferanordnungen der verschiedenen Bautypen möglich. Fig. 4 zeigt üblicherweise an Offshore-Windenergieanlagen OWEA 1, OWEA 2, OWEA 3, OWEA 4 vorgesehene Leiterleuchten 401, die entlang einer außen am Turm der Windenergieanlagen OWEA 1, OWEA 2, OWEA 3, OWEA 4 angebrachten Leiter 400 sowie Landeleuchten 402, die entlang des Umfanges einer Hubschrauberlandefläche 203 auf dem Dach der Windenergieanlagen OWEA 1, OWEA 2, OWEA 3, OWEA 4 vorgesehen sind. Die Befeuerungseinrichtung umfasst die Leiterleuchten 401 und die Landeleuchten 402. Im Notbefeuerungsmodus sind die Leuchten 401, 402 alle oder einige von ihnen angeschaltet, um ständig abstrahlendes Licht und / oder Blinklichter oder irgendeine andere denkbare Impulsfolge zu erzeugen.

### Bezugszeichenliste

- 11: Scheinwerfer
- 12: Scheinwerfer
- 13: Scheinwerfer
- 15: Rotorblätter
- 16: Maschinenhaus

- 21: Scheinwerfer
- 22: Scheinwerfer
- 25: Rotorblätter
- 26: Maschinenhaus

- 31: Scheinwerfer
- 32: Scheinwerfer
- 33: Scheinwerfer
- 35: Rotorblätter
- 36: Maschinenhaus

- 41: Scheinwerfer
- 42: Scheinwerfer
- 43: Scheinwerfer
- 45: Rotorblätter
- 46: Maschinenhaus
- 47: Scheinwerfer
- 48: Rotornabe

- 50: Turm
- 51: Scheinwerfer
- 53: Scheinwerfer
- 54: Scheinwerfer
- 55: Rotorblatt
- 56: Maschinenhaus
- 57: Hindernisfeuer
- 58: Gefahrenfeuer

- 100: Empfangseinrichtung
- 150: Dämmerungsschalter

- 200: Steuerungseinrichtung
- 203: Hubschrauberlandefläche

- 400: Leiter
- 401: Leiterleuchen
- 402: Landeleuchten
- OWEA 1: Windenergieanlage
- OWEA 2: Windenergieanlage
- OWEA 3: Windenergieanlage
- OWEA 4: Windenergieanlage

## Patentansprüche

1. Verfahren zum Betreiben eines Offshore-Windparks mit mindestens einer Windenergieanlage (OWEA 1, OWEA 2, OWEA 3, OWEA 4) und einer Befeuerungseinrichtung, die in einem Normalmodus betrieben wird, **dadurch gekennzeichnet, dass**
ein Gefahrensignal durch eine Empfangseinrichtung (100) empfangen wird,
das empfangene Gefahrensignal einer Steuerungseinrichtung (200) zugeführt wird, die die Befeuerungseinrichtung vom Normalmodus in einen Notbefeuerungsmodus schaltet, und wenigstens ein Scheinwerfer (11, 12, 13, 21, 22, 31, 32, 33, 41, 42, 43, 47, 51) auf einem Maschinenhaus (16, 26, 36, 46, 56) eingeschaltet wird, der die Rotorblätter (15, 25, 35, 45, 55) der dem Maschinenhaus (16, 26, 36, 46, 56) zugeordneten Windenergieanlage (OWEA 1, OWEA 2, OWEA 3, OWEA 4) anstrahlt und/oder mindestens ein Scheinwerfer (11, 12, 13, 21, 22, 31, 32, 33, 41, 42, 43, 47, 51) eingeschaltet wird, der auf die Meeresoberfläche strahlt und/oder mindestens ein Scheinwerfer (11, 12, 13, 21, 22, 31, 32, 33, 41, 42, 43, 47, 51) einer Windenergieanlage (OWEA 1, OWEA 2, OWEA 3, OWEA 4) angeschaltet wird, der eine weitere Windenergieanlage (OWEA 1, OWEA 2, OWEA 3, OWEA 4) anstrahlt.

2. Verfahren nach Anspruch 1,
**dadurch gekennzeichnet, dass** im Notbefeuerungsmodus wenigstens ein zusätzlicher Scheinwerfer (11, 12, 13, 21, 22, 31, 32, 33, 41, 42, 43, 47, 51, 53, 54) eingeschaltet wird.

3. Verfahren nach wenigstens einem der Ansprüche 1 oder 2,
**dadurch gekennzeichnet, dass** der Notbefeuerungsmodus so lange eingeschaltet bleibt, bis das Gefahrensignal nicht mehr erkannt wird und/oder eine vorgebbare Zeit seit einer Erkennung des Gefahrensignals überschritten wird.

4. Verfahren nach wenigstens einem der Ansprüche 1 bis 3,
**dadurch gekennzeichnet, dass** Helligkeitswerte und/oder Sichtweitenwerte in der Umgebung gemessen werden und die Messwerte der Steuerungseinrichtung (200) zugeführt werden und eine Helligkeit und/oder Anzahl von im Notfallmodus zugeschalteten Scheinwerfern (11, 12, 13, 21, 22, 31, 32, 33, 41, 42, 43, 47, 51, 53, 54) und/oder Leuchten (401, 402) der gemessenen Helligkeit und und/oder den gemessenen Sichtweiten in der Weise angepasst wird, dass je höher die Messwerte sind, desto geringer die Helligkeit und/oder die Anzahl der zugeschalteten Scheinwerfer (11, 12, 13, 21, 22, 31, 32, 33, 41, 42, 43, 47, 51, 53, 54) und/oder Leuchten (401, 402).

5. Verfahren nach wenigstens einem der Ansprüche 1 bis 4,
**dadurch gekennzeichnet, dass** die Empfangseinrichtung (100) ein extern abgegebenes Gefahrensignal empfängt und ein internes Gefahrensignal an alle Windenergieanlagen (OWEA 1, OWEA 2, OWEA 3, OWEA 4) des Windparks überträgt, und den Windenergieanlagen zugeordnete Befeuerungseinrichtungen werden vom Normalmodus in den Notbefeuerungsmodus geschaltet.

6. Verfahren nach wenigstens einem der Ansprüche 1 bis 5,
**dadurch gekennzeichnet, dass** im Normalmodus eingeschaltete Leuchten (401, 402) im Notbefeuerungsmodus weiter betrieben werden.

7. Verfahren nach wenigstens einem der Ansprüche 1 bis 6,
**dadurch gekennzeichnet, dass** mindestens ein Scheinwerfer (47) in einer Rotornabe (48) angeschaltet wird, der in einen Innenraum eines Rotorblattes (45) strahlt und das Rotorblatt (45) mit einer zumindest bereichsweise lichtdurchlässigen Wandung versehen wird.

8. Verfahren nach wenigstens einem der Ansprüche 1 bis 7,
**dadurch gekennzeichnet, dass** im Notbefeuerungsmodus alle außen an der Windenergieanlage (OWEA 1, OWEA 2, OWEA 3, OWEA 4) angebrachten Scheinwerfer (11, 12, 13, 21, 22, 31, 32, 33, 41, 42, 43, 47, 51, 53, 54) zusätzlich zum Normalmodus eingeschaltet werden.

9. Verfahren nach wenigstens einem der Ansprüche 1 bis 8,
**dadurch gekennzeichnet, dass** an einer Leiter (400) und/oder einer Landeplattform (203) und/oder einer Windenergieanlage (OWEA 1, OWEA 2, OWEA 3, OWEA 4) angeordnete Leuchten (401, 402) und / oder Wegweiserbeleuchtungen eingeschaltet werden.

10. Verfahren nach wenigstens einem der Ansprüche 1 bis 9,
**dadurch gekennzeichnet, dass** zusätzlich eine Tagesbefeuerung (57) eingeschaltet wird.

11. Verfahren nach wenigstens einem der Ansprüche 1 bis 10,
**dadurch gekennzeichnet, dass** an einer Windenergieanlage (OWEA 1, OWEA 2, OWEA 3, OWEA 4) beleuchtete Wegweiser, die den kürzesten Weg zum Ausgang des Windparks zeigen, angeordnet und eingeschaltet werden.

12. Verfahren nach wenigstens einem der Ansprüche 1 bis 11,
**dadurch gekennzeichnet, dass** eine Zentralsteuerung oder eine Windenergieanlage (OWEA 1, OWEA 2, OWEA 3, OWEA 4) im Windpark ein Signal über das Einschalten des Notbefeuerungsmodus an eine Fernüberwachungseinrichtung sendet.

13. Offshore-Windpark zur Durchführung eines Verfahrens nach wenigstens einem der Ansprüche 1 bis 12 mit mindestens einer Windenergieanlage (OWEA 1, OWEA 2, OWEA 3, OWEA 4) und einer Befeuerungseinrichtung, die in einem Normalmodus betreibbar ist, **gekennzeichnet durch**
eine Empfangseinrichtung (100) für ein Gefahrensignal,
eine Steuerungseinrichtung (200), der das empfangene Gefahrensignal zuführbar ist und die die Befeuerungseinrichtung vom Normalmodus in einen Notbefeuerungsmodus schaltet, und **durch** wenigstens einen an einem Turm einer Windenergieanlage (OWEA 1, OWEA 2, OWEA 3, OWEA 4) angeordneten, auf die Meeresoberfläche richtbaren Scheinwerfer (11, 12, 13, 21, 22, 31, 32, 33, 41, 42, 43, 47, 51) und/oder wenigstens einen an einem Turm einer Windenergieanlage (OWEA 1, OWEA 2, OWEA 3, OWEA 4) angeordneten, auf eine benachbarte Windenergieanlage (OWEA 1, OWEA 2, OWEA 3, OWEA 4) richtbaren Scheinwerfer (11, 12, 13, 21, 22, 31, 32, 33, 41, 42, 43, 47, 51).

14. Offshore Windpark nach Anspruch 13,
**gekennzeichnet durch** wenigstens einen Dämmerungsschalter (150) und/oder ein Sichtweitenmessgerät zur Ermittlung von der Steuerungseinrichtung (200) zugeführten Messwerten und **dadurch**, dass die Steuerungseinrichtung (200) die Helligkeit und /oder Anzahl von im Notfallmodus zugeschalteten Scheinwerfern (11, 12, 13, 21, 22, 31, 32, 33, 41, 42, 43, 47, 51, 53, 54) und/oder Leuchten (401, 402) der gemessenen Helligkeit und/oder der gemessenen Sichtweite in der Weise anpasst, dass je höher die Messwerte sind, desto geringer die Helligkeit und/oder die Anzahl der zugeschalteten Scheinwerfer (11, 12, 13, 21, 22, 31, 32, 33, 41, 42, 43, 47, 51, 53, 54) und/oder Leuchten (401, 402) ist.

15. Offshore Windpark nach wenigstens einem der Ansprüche 13 und 14,
**dadurch gekennzeichnet, dass** wenigstens eines der Rotorblätter (45) eine lichtdurchlässige Wandung aufweist und ein Scheinwerfer (47) an einer Rotornabe (48) des Rotorblattes (45) angeordnet ist und in ein Inneres des Rotorblattes (45) gerichtet ist.

16. Offshore Windpark nach wenigstens einem der Ansprüche 13 bis 15,
**dadurch gekennzeichnet, dass** die Befeuerungseinrichtung Leuchten (401, 402) an einer Leiter (400), an einer Landeplattform (203) oder Wegweiserbeleuchtungen aufweist, die separat oder in Kombination im Notbefeuerungsmodus einschaltbar sind.

## Claims

1. A method of operating an offshore wind farm with at least one offshore wind energy plant (OWEA 1, OWEA 2, OWEA 3, OWEA 4) and a navigation device which is operated in a normal mode, **characterized in that a** hazard signal is received by a receiving device (100), and the received hazard signal is delivered to a control device (200) which switches the navigation device from the normal mode to an emergency navigation mode, and at least one floodlight (11, 12, 13, 21, 22, 31, 32, 33, 41, 42, 43, 47, 51) on a machine housing (16, 26, 36, 46, 56) is switched on, and illuminates the rotor blades (15, 25, 35, 45, 55) of the wind energy plant (OWEA 1, OWEA 2, OWEA 3, OWEA 4) associated with the machine housing (16, 26, 36, 46, 56) and/or at least one floodlight (11, 12, 13, 21, 22, 31, 32, 33, 41, 42, 43, 47, 51) is switched on which radiates onto the surface of the sea and/or at least one floodlight (11, 12, 13, 21, 22, 31, 32, 33, 41, 42, 43, 47, 51) of a wind energy plant (OWEA 1, OWEA 2, OWEA 3, OWEA 4) is switched on which radiates a further wind energy plant (OWEA 1, OWEA 2, OWEA 3, OWEA 4).

2. A method according to Claim 1, **characterized in that** an additional floodlight (11, 12, 13, 21, 22, 31, 32, 33, 41, 42, 43, 47, 51, 53, 54) is switched on in the emergency navigation mode.

3. A method according to at least one of Claims 1 or 2, **characterized in that** the emergency flight navigation mode is switched on until the hazard signal is no longer detected and/or a pre-settable time has been exceeded since detection of the hazard signal.

4. A method according to at least one of Claims 1 to 3, **characterized in that** brightness values and/or visibility range values in the environment are measured and the measurement values are delivered to the control device (200) and a brightness and/or number of floodlights (11, 12, 13, 21, 22, 31, 32, 33, 41, 42, 43, 47, 51, 53, 54) and/or lights (401, 402) switched on in the emergency flight navigation mode is or are adapted to the measured degree of brightness and/or the measured visibility range values in such a way that the higher the measurement values, the lower the degree of brightness and/or the number of floodlights (11, 12, 13, 21, 22, 31, 32, 33, 41, 42, 43, 47, 51, 53, 54) and/or lights (401, 402) switched on.

5. A method according to at least one of Claims 1 to 4, **characterized in that** the receiving device (100) receives an externally emitted hazard signal and transmits an internal hazard signal to all the wind energy plants (OWEA 1, OWEA 2, OWEA 3, OWEA 4) of the wind farm, and flight navigation devices associated with the wind energy plants are switched from the normal mode into the emergency flight navigation mode.

6. A method according to at least one of Claims 1 to 5, **characterized in that** lights (401, 402) switched on in the normal mode are further operated in the emergency flight navigation mode.

7. A method according to at least one of Claims 1 to 6, **characterized in that** at least one floodlight (47) in a rotor hub (48) is switched on, which radiates into an interior of a rotor blade (45) and the rotor blade (45) is provided with a wall which is translucent at least in part.

8. A method according to at least one of Claims 1 to 7, **characterized in that** in the emergency flight navigation mode all the floodlights (11, 12, 13, 21, 22, 31, 32, 33, 41, 42, 43, 47, 51, 53, 54) attached on the outside of the wind energy plant (OWEA 1, OWEA 2, OWEA 3, OWEA 4) are switched on in addition to the normal mode.

9. A method according to at least one of Claims 1 to 8, **characterized in that** lights (401, 402) and/or guiding lights arranged on a ladder (400) and/or a landing platform (203) and/or a wind energy plant (OWEA 1, OWEA 2, OWEA 3, OWEA 4) are switched on.

10. A method according to at least one of Claims 1 to 9, **characterized in that** a daytime navigation light (57) is additionally switched on.

11. A method according to at least one of Claims 1 to 10, **characterized in that** illuminated guiding lights which show the shortest way to the exit of the wind farm are arranged on a wind energy plant (OWEA 1, OWEA 2, OWEA 3, OWEA 4) and are switched on.

12. A method according to at least one of Claims 1 to 11, **characterized in that** a central control means or a wind energy plant (OWEA 1, OWEA 2, OWEA 3, OWEA 4) in the wind farm sends a signal concerning switching on the emergency flight navigation mode to a remote monitoring unit.

13. An offshore wind farm for performing a method according to at least one of Claims 1 to 12 with at least one wind energy plant (OWEA 1, OWEA 2, OWEA 3, OWEA 4) and a flight navigation device which is capable of being operated in a normal mode, **characterized by** a receiving device (100) for a hazard signal [and] a control device (200) to which the received hazard signal is capable of being delivered and which switches the flight navigation device from the normal mode into an emergency flight navigation mode and by at least one floodlight (11, 12, 13, 21, 22, 31, 32, 33, 41, 42, 43, 47, 51) arranged on a tower of a wind energy plant (OWEA 1, OWEA 2, OWEA 3, OWEA 4) capable of being directed onto the surface of the sea, and/or at least one floodlight (11, 12, 13, 21, 22, 31, 32, 33, 41, 42, 43, 47, 51) arranged on a tower of a wind energy plant (OWEA 1, OWEA 2, OWEA 3, OWEA 4) capable of being directed onto an adjacent wind energy plant (OWEA 1, OWEA 2, OWEA 3, OWEA 4).

14. An offshore wind farm according to Claim 13, **characterized by** at least one dimmer switch (150) and/or visibility range measurement means for determining measurement values supplied to the control device (200), and in that the control device (200) adapts the brightness and/or the number of floodlights (11, 12, 13, 21, 22, 31, 32, 33, 41, 42, 43, 47, 51, 53, 54) and/or lights (401, 402) switched on to the emergency mode to the measured brightness and/or the measured visibility range in such a way that the higher the measurement values the lower the brightness and/or the number of the floodlights (11, 12, 13, 21, 22, 31, 32, 33, 41, 42, 43, 47, 51, 53, 54) and/or lights (401, 402) switched on.

15. An offshore wind farm according to at least one of Claims 13 and 14, **characterized in that** at least one of the rotor blades (45) has a translucent wall and a floodlight (47) is arranged on a hub (48) of the rotor blade (45) and is directed into an interior of the rotor blade (45).

16. An offshore wind farm according to at least one of Claims 13 to 15, **characterized in that** the flight navigation device has lights (401, 402) on a ladder (400), on a landing platform (203) or guiding lights which are capable of being switched on separately or in combination in the emergency flight navigation mode.

## Revendications

1. Procédé pour faire fonctionner un parc éolien offshore avec au moins une éolienne (OWEA1, OWEA2, OWEA3, OWEA4) et un dispositif de balisage qui fonctionne dans un mode normal,
**caractérisé en ce**
**qu'**un signal de danger est reçu par un dispositif de réception (100), le signal de danger reçu est amené à un dispositif de commande (200) qui commute le dispositif de balisage du mode normal en mode de balisage de détresse et au moins un projecteur (11, 12, 13, 21, 22, 31, 32, 33, 41, 42, 43, 47, 51) sur une nacelle (16, 26, 36, 46, 56) s'allume, projecteur qui illumine les pales de rotor (15, 25, 35, 45, 55) de l'éolienne (OWEA1, OWEA2, OWEA3, OWEA4) associée à la nacelle (16, 26, 36, 46, 56) et/ou au moins un projecteur (11, 12, 13, 21, 22, 31, 32, 33, 41, 42, 43, 47, 51) qui éclaire la surface de la mer s'allume et/ou au moins un projecteur (11, 12, 13, 21, 22, 31, 32, 33, 41, 42, 43, 47, 51) d'une éolienne (OWEA1, OWEA2, OWEA3, OWEA4) est mis en marche qui illume une autre éolienne (OWEA1, OWEA2, OWEA3, OWEA4).

2. Procédé selon la revendication 1, **caractérisé en ce qu'**en mode de balisage de détresse au moins un projecteur supplémentaire (11, 12, 13, 21, 22, 31, 32, 33, 41, 42, 43, 47, 51, 53, 54) s'allume.

3. Procédé selon au moins l'une des revendications 1 ou 2, **caractérisé en ce que** le mode de balisage de détresse reste allumé tant que le signal de danger n'est plus reconnu et/ou qu'un temps prédéfini depuis une reconnaissance du signal de danger est dépassé.

4. Procédé selon au moins l'une des revendications 1 à 3, **caractérisé en ce que** des valeurs de luminosité et/ou des valeurs de visibilité sont mesurées dans les environs et les valeurs mesurées sont amenées au dispositif de commande (200) et une luminosité et/ou un nombre de projecteurs mis en marche en plus en mode de détresse (11, 12, 13, 21, 22, 31, 32, 33, 41, 42, 43, 47, 51, 53, 54) et/ou de feux (401, 402) sont adaptés à la luminosité mesurée et/ou aux visibilités mesurées de manière que, plus les valeurs mesurées sont élevées, plus la luminosité et/ou le nombre des projecteurs (11, 12, 13, 21, 22, 31, 32, 33, 41, 42, 43, 47, 51, 53, 54) et/ou des feux (401, 402) mis en marche en plus est faible.

5. Procédé selon au moins l'une des revendications 1 à 4, **caractérisé en ce que** le dispositif de réception (100) reçoit un signal de danger émis de manière externe et transmet un signal de danger interne à toutes les éoliennes (OWEA1, OWEA2, OWEA3, OWEA4) du parc éolien et des dispositifs de balisage associés aux éoliennes sont commutés du mode normal en mode de balisage de détresse.

6. Procédé selon au moins l'une des revendications 1 à 5, **caractérisé en ce que** des feux allumés en mode normal (401, 402) continuent à fonctionner en mode de balisage de détresse.

7. Procédé selon au moins l'une des revendications 1 à 6, **caractérisé en ce qu'**au moins un projecteur (47) est allumé dans un moyeu de rotor (48) qui rayonne dans un espace intérieur d'une pale de rotor (45) et la pale de rotor (45) est pourvue d'une paroi translucide au moins par sections.

8. Procédé selon au moins l'une des revendications 1 à 7, **caractérisé en ce qu'**en mode de balisage de détresse tous les projecteurs (11, 12, 13, 21, 22, 31, 32, 33, 41, 42, 43, 47, 51, 53, 54) fixés à l'extérieur sur l'éolienne (OWEA1, OWEA2, OWEA3, OWEA4) sont allumés en plus du mode normal.

9. Procédé selon au moins l'une des revendications 1 à 8, **caractérisé en ce que** des feux (401, 402) et/ou des éclairages de signalisation sont allumés sur une échelle (400) et/ou une plateforme d'atterrissage (203) et/ou une éolienne (OWEA1, OWEA2, OWEA3, OWEA4).

10. Procédé selon au moins l'une des revendications 1 à 9, **caractérisé en ce qu'**un balisage de jour (57) est allumé en plus.

11. Procédé selon au moins l'une des revendications 1 à 10, **caractérisé en ce que** des panneaux de signalisation éclairés qui montrent le trajet le plus court vers la sortie du parc éolien sont placés et allumés sur une éolienne (OWEA1, OWEA2, OWEA3, OWEA4).

12. Procédé selon au moins l'une des revendications 1 à 11, **caractérisé en ce qu'**une commande centrale ou une éolienne (OWEA1, OWEA2, OWEA3, OWEA4) dans le parc éolien émet un signal sur la mise en marche du mode de balisage de détresse à un dispositif de surveillance à distance.

13. Parc éolien offshore pour exécuter un procédé selon au moins l'une des revendications 1 à 12 avec au moins une éolienne (OWEA1, OWEA2, OWEA3, OWEA4) et un dispositif de balisage qui peut fonctionner en mode normal, **caractérisé par**
un dispositif de réception (100) pour un signal de danger,
un dispositif de commande (200) auquel le signal de danger reçu peut être amené et qui met en marche le dispositif de balisage du mode normal à un mode de balisage de détresse et par au moins un projecteur (11, 12, 13, 21, 22, 31, 32, 33, 41, 42, 43, 47, 51) placé sur une tour d'une éolienne (OWEA1, OWEA2, OWEA3, OWEA4), qui peut être dirigé sur la surface de la mer et/ou au moins un projecteur (11, 12, 13, 21, 22, 31, 32, 33, 41, 42, 43, 47, 51) placé sur une tour d'une éolienne (OWEA1, OWEA2, OWEA3, OWEA4), qui peut être dirigé sur une éolienne voisine (OWEA1, OWEA2, OWEA3, OWEA4).

14. Parc éolien offshore selon la revendication 13, **caractérisé par** au moins un interrupteur crépusculaire (150) et/ou un appareil de mesure de visibilité pour détecter des valeurs de mesure amenées au le dispositif de commande (200) et par le fait que le dispositif de commande (200) adapte la luminosité et/ou le nombre de projecteurs (11, 12, 13, 21, 22, 31, 32, 33, 41, 42, 43, 47, 51, 53, 54) et/ou de feux (401, 402) mis en circuit en plus en mode de détresse à la luminosité mesurée et/ou à la visibilité mesurée de manière que, plus les valeurs mesurées sont élevées, plus la luminosité est faible et/ou le nombre de projecteurs (11, 12, 13, 21, 22, 31, 32, 33, 41, 42, 43, 47, 51, 53, 54) et/ou de feux (401, 402) mis en circuit en plus.

15. Parc éolien offshore selon au moins l'une des revendications 13 et 14, **caractérisé en ce qu'**au moins l'une des pales du rotor (45) présente une paroi translucide et qu'un projecteur (47) est placé sur un moyeu de rotor (48) de la pale de rotor (45) et est orienté dans un intérieur de la pale de rotor (45).

16. Parc éolien offshore selon au moins l'une des revendications 13 à 15, **caractérisé en ce que** le dispositif de balisage présente des feux (401, 402) sur une échelle (400), sur une plateforme d'atterrissage (203) ou des éclairages de signalisation qui peuvent être allumés séparément ou en combinaison en mode de balisage de détresse.
